# EUROPEAN PATENT SPECIFICATION

(11) **EP 1 707 416 B1**
(45) Date of publication and mention of the grant of the patent: **15.08.2007**
(21) Application number: 05006887.3
(22) Date of filing: 30.03.2005
(51) Int. Cl.: B60K 6/04, F16H 3/72

(54) **Hybrid drive unit**
Hybrid-Antriebseinheit
Unité de puissance hybride

(43) Date of publication of application: 04.10.2006
(73) Proprietor: AISIN AW CO., LTD., Anjo-shi, Aichi-ken 444-1192 (JP)
(72) Inventor: Takami, Shigeki, Anjo-shi, Aichi-ken 444-1192 (JP); Yamaguchi, Kozo, Anjo-shi, Aichi-ken 444-1192 (JP); Inuzuka, Takeshi, Anjo-shi, Aichi-ken 444-1192 (JP); Ito, Tomohiko, Anjo-shi, Aichi-ken 444-1192 (JP)
(74) Representative: TBK-Patent

(56) References cited:
- EP-A- 1 279 544
- EP-A- 1 386 771
- US-A- 5 980 410
- US-A1- 2002 142 876
- US-A1- 2005 064 974

## Description

### BACKGROUND OF THE INVENTION

### 1. Field of the Invention

The present invention relates to a drive unit of a hybrid vehicle in which is mounted both an engine (an internal combustion engine) and an electric machine. More particularly, the present invention relates to a drive unit which changes drive modes using two electric machines and two differential gear units.

### 2. Description of the Related Art

One example of a drive unit which is connected to an engine and mounted in a hybrid vehicle is a two motor type split hybrid drive unit (see US Patent Application Laid-Open No. 2002-0142876). This hybrid drive unit uses two electric machines (simply referred to in this specification as "motors" or "motor-generators" for the sake of convenience) and two differential gear units, and switches between three and four elements depending on the running state of the vehicle by controlling the differential gear units by applying/releasing two of the engagement elements. As a result, this drive unit achieves a three-element reduction mode when the vehicle is run at low speeds, and achieves a four-element direct drive mode when the vehicle is run at high speeds.

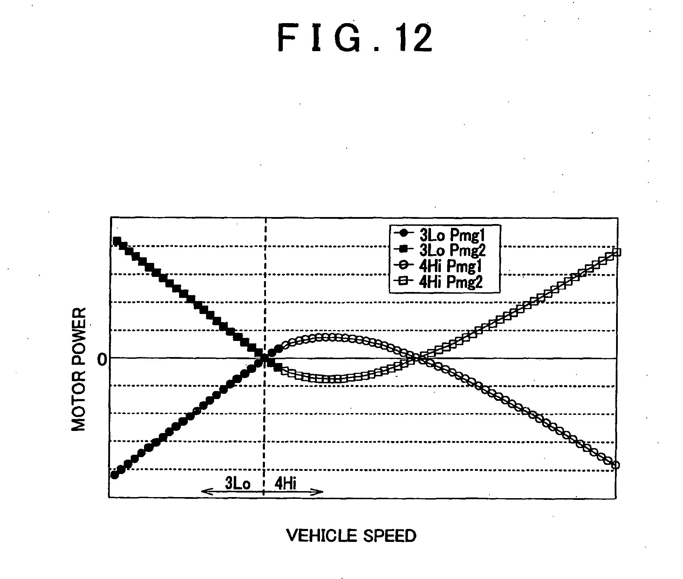

With the drive unit in the foregoing publication, however, in the three-element reduction mode (3 Lo), the relationship in which the output Pmg1 of one of the motors that provides motor power cancels out the output Pmg2 of the other motor that receives the reaction force of that output Pmg1, increases and decreases linearly depending on the vehicle speed, as shown by the operating characteristics in FIG. 12. On the other hand, in the four-element direct drive mode (4 Hi), this relationship changes in a curve shape with respect to the vehicle speed. The rate of increase in the output of the motor providing motor power increases as the vehicle speed increases.

As used herein the "four-element direct drive mode" refers to the state that rotational speed of the output member is the same as rotational speed of the planetary gear element, which is connected to the output member. As used herein the term "three-element direct drive mode" refers to the mode that includes two states that rotational speed of the output member is the same as rotational speed of the planetary gear, which is connected to the output member, and the rotational speed of the second electric machine (MG2) is the same as of the output member.

Due to this relationship, the following problems arise in the drive unit of the above publication when in the four-element direct drive mode.
1. During regeneration, one motor is in a regenerating state while the other motor is in a powering state. As a result, power that is equal to, or greater than, the deceleration energy is electrically converted so the energy recovery efficiency deteriorates.
2. In the high vehicle speed/low driving force range (i.e., a negative hybrid range), the electrical conversion ratio increases so the transmission ratio deteriorates.

A hybrid system has two modes; a positive hybrid state and a negative hybrid state.

The positive hybrid state is that the motor connected to the split planetary gear which splits the engine power, generates electrical power for a reaction force of the engine output, and the motor connected to the output member consumes the electrical power.

The negative hybrid state is that the motor connected to the split planetary gear which splits the engine power, consumes electrical power for a reaction force of the engine output, and the motor connected to the output member generates the electrical power.

Document US 5 980 410 discloses an electro-mechanical transmission having a first and a second motor/generator and a planetary gearing mechanism. The transmission of document US 5 980 410 comprises the features of the introductory part of claim 1.

### SUMMARY OF THE INVENTION

The present invention thus aims to solve the foregoing problems.

The above object is solved by a hybrid drive unit having the features of claim 1. Further advantageous developments are subject matter of the further claims.

Thereby a three-element direct drive mode is added, as an additional mode, to the three-element reduction mode and the four-element direct drive mode by adding one friction engagement element.

The present invention provides a hybrid drive unit in which, running in a three-element direct drive mode at high vehicle speeds not only improves the recovery efficiency of deceleration energy during regeneration, but also improves efficiency in the negative hybrid range. Furthermore, a reduction in output of a first electric machine enables a drive unit to be reduced in size compared to when only two modes, i.e., a three-element reduction mode and a direct drive mode, are available.

### BRIEF DESCRIPTION OF THE DRAWINGS

FIG 1 is a skeleton view of a gear train of a drive unit according to one exemplary embodiment of the present invention;
FIG. 2 is a clutch and brake application chart showing application and release of friction engagement elements used to achieve various modes of the gear train;
FIG. 3 is a velocity diagram showing operation in the various modes of the gear train;
FIG. 4 is a graph showing the relationships of input speed, motor torque, and motor output with respect to the vehicle speed of the drive unit;
FIG 5 is a map showing mode switches;
FIG 6 is an explanatory view showing a series of gear trains according to another exemplary embodiment of the present invention and the connective relationships between each of their structural elements, together with velocity diagrams showing their operation;
FIG 7 is an explanatory view showing another series of gear trains and the connective relationships between each of their structural elements, together with velocity diagrams showing their operation;
FIG 8 is an explanatory view showing still another series of gear trains and the connective relationships between each of their structural elements, together with velocity diagrams showing their operation;
FIG 9 is an explanatory view showing a series of gear trains of a different type and the connective relationships between each of their structural elements, together with velocity diagrams showing their operation;
FIG 10 is an explanatory view showing another series of gear trains of a different type and the connective relationships between each of their structural elements, together with velocity diagrams showing their operation;
FIG 11 is an explanatory view showing still another series of gear trains of a different type and the connective relationships between each of their structural elements, together with velocity diagrams showing their operation; and
FIG 12 is a graph showing the relationship between motor output and vehicle speed of a related drive unit.

### DETAILED DESCRIPTION OF THE PREFERRED EMBODIMENTS

A drive unit according to one application of the present invention preferably employs a construction in which a gear element of a first differential gear unit, which is coupled to a second electric machine, is coupled, via a first friction engagement element, to a gear element of a second differential gear unit, which is coupled to a third friction engagement element. According to this structure, when switching from a three-element mode to a four-element mode, it is possible to make that mode switch while the rotation speed of the first electric machine is zero. Further, shifting with no rotational difference of the friction element of the friction engagement element to be applied becomes possible during any mode switch, including a switch from the four-element mode to the three-element mode. As a result, shift shock is reduced and the thermal load on the friction element is also reduced.

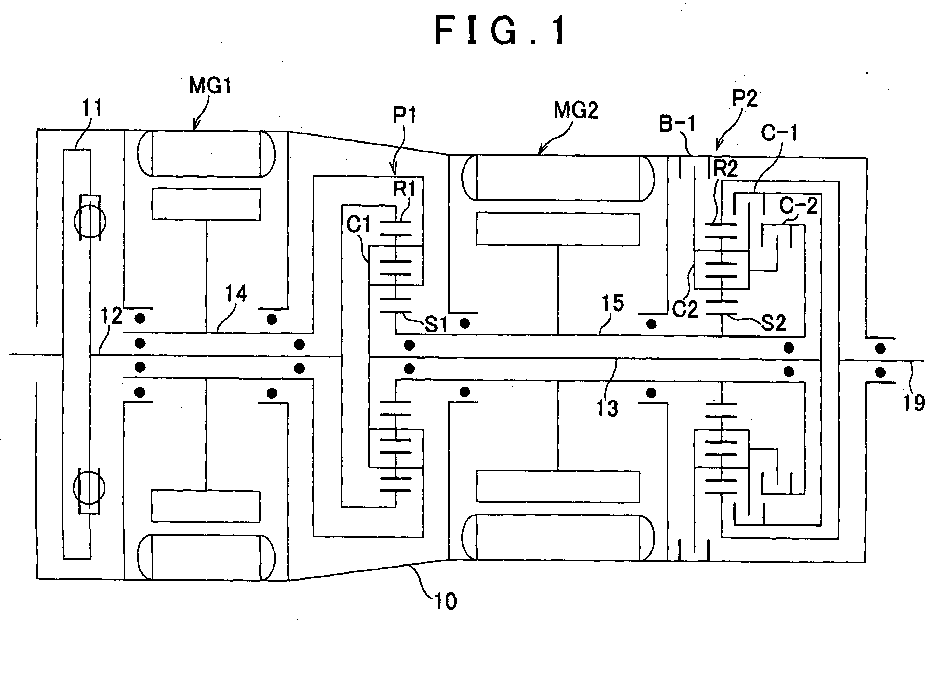

An exemplary embodiment of the present invention will hereinafter be described with reference to the appended drawings. FIG. 1 is a skeleton view of a gear train of a drive unit according to one application of the present invention. As shown in the drawing, this drive unit is longitudinal mounted for a front-engine rear-drive vehicle and connected to an engine output shaft via a drive plate 11 having a flywheel damper. The drive unit includes, in the order from the engine connection side and disposed about a single axis in a common drive unit case 10, a motor-generator MG1, a first differential gear unit P1, a motor MG2, and a second differential gear unit P2. Three friction engagement elements, i.e., a brake B-1, a clutch C-1, and another clutch C-2, are disposed adjacent to the second differential gear unit P2.

In this gear train, an input shaft 12 is used as an input member that receives a driving force from the engine, an output shaft 19 is used as an output member that outputs the driving force to a wheel, the motor-generator MG1 is used as a first electric machine, the motor MG2 is used as a second electric machine, a double pinion planetary gear (hereinafter referred to in this exemplary embodiment as a "three-element planetary gear") P1 is used as the first differential gear unit which includes at least three gear elements, and a double pinion planetary gear (hereinafter referred to in this exemplary embodiment as a "reduction planetary gear") P2 is used as the second differential gear unit which also includes at least three gear elements. The three-element planetary gear P1 is arranged such that one of its three gear elements is connected to the input shaft 12, another of its three gear elements is connected to the motor-generator MG1, and another of its three gear elements is connected to the motor MG2. The reduction planetary gear P2 is arranged such that one of its three gear elements is connected to the output shaft 19, another of its three gear elements is coupled to the brake B-1, and another of its three gear elements is coupled to the gear element of the three-element planetary gear P1, which is coupled to the motor MG2. The gear element of the reduction planetary gear P2, which is coupled to the brake B-1, is coupled, via the clutch C-1, to a gear element other than the gear element of the three-element planetary gear P1, which is directly connected to a gear element of the reduction planetary gear P2. Furthermore, two of the gear elements of the reduction planetary gear P2 are coupled together via the clutch C-2.

The three-element planetary gear P1 is made up of gear elements including a sun gear S1, a ring gear R1, and a carrier C1 which rotatably supports intermeshing pinions, one of which is in mesh with the sun gear S 1 and the other of which is in mesh with the ring gear R1. The ring gear R1 is connected to the input shaft 12 and acts as an input element. The carrier C 1 is one differential rotation element which is connected to both a rotor shaft 14 of the motor-generator MG 1 and an intermediate shaft 13, and the sun gear S 1 is another differential rotation element which is connected to a rotor shaft 15 of the motor MG2.

The reduction planetary gear P2 is made up of gear elements including a sun gear S2, a ring gear R2, and a carrier C2 which rotatably supports intermeshing pinions, one of which is in mesh with the sun gear S2 and the other of which is in mesh with the ring gear R2. The ring gear R2 is connected to the output shaft 19 and acts as an output element. The sun gear S2 of this reduction planetary gear P2 is coupled both to the sun gear S 1 of the three-element planetary gear P1 via the rotor shaft 15 and to the carrier C2 via the clutch C-2. This carrier C2 is connected to the intermediate shaft 13 via the clutch C-1 and can be held to the drive unit case 10 via the brake B-1.

The rotor shaft 14 is a hollow shaft inside through which runs the input shaft 12. The outer periphery of the rotor shaft 14 is bearing-supported by supports of the drive unit case 10 via a pair of front and rear bearings. Similarly, the rotor shaft 15 is also a hollow shaft inside through which runs the intermediate shaft 13, and the outer periphery of the rotor shaft 15 is bearing-supported by supports of the drive unit case 10 via a pair of front and rear bearings. Meanwhile, the outer periphery of the input shaft 12 is bearing-supported by the inner periphery of the rotor shaft 14 via a pair of front and rear bearings. Thus, the input shaft 12 is ultimately supported by the supports of the drive case 10 via the rotary shaft 14. Similarly, the outer periphery of the intermediate shaft 13 is bearing-supported by the inner periphery of the rotor shaft 15 via a pair of front and rear bearings. Thus, the input shaft 13 is ultimately supported by the supports of the drive case 10 via the rotary shaft 15. The outer periphery of the output shaft 19 is bearing-supported via bearings by a rear wall of the drive unit case 10. The bearings are indicated by solid circles in FIG 1.

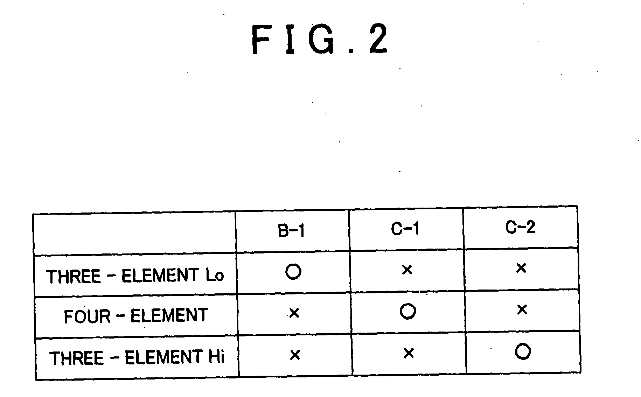

According to the drive unit of the foregoing structure, the three friction engagement elements make it possible to achieve three modes: a three-element low (Lo) mode by applying the brake B-1, a four-element mode by applying the clutch C-1, and a three-element high (Hi) mode by applying the clutch C-2, as shown in the clutch and brake application chart in FIG 2. A circle in the chart denotes application and an "X" denotes release. Next, operation in each mode will be described.

### (1) Three-Element Lo Mode

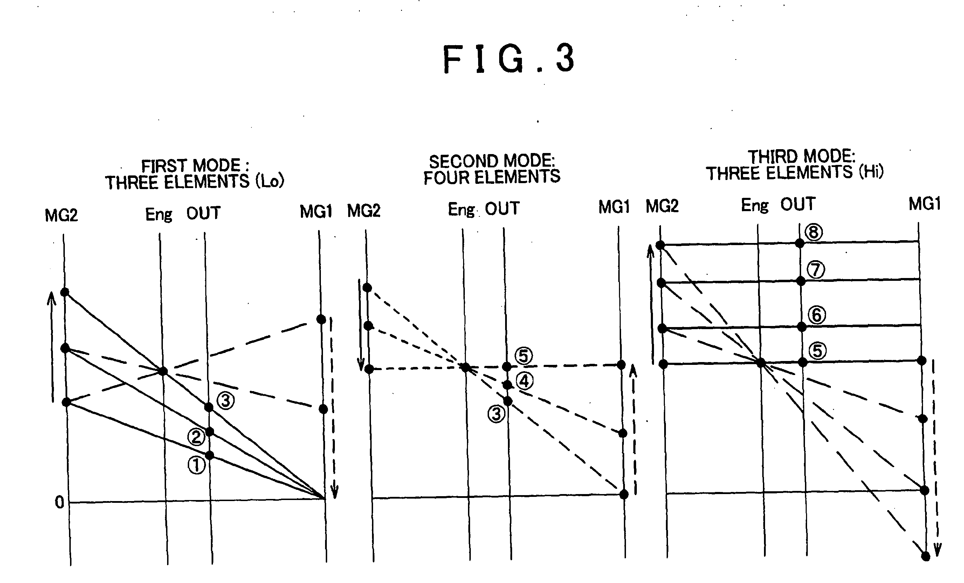

This mode is used when starting the engine, running with the motor, and accelerating during take-off. It is achieved by applying the brake B-1 such that the carrier C2 of the reduction planetary gear P2 is held to the drive unit case 10. In this mode, the motor MG2 provides motor power which drives the sun gear S2 of the reduction planetary gear P2, and the carrier C2 is held stationary by applying the brake B-1 so that rotation of the ring gear R2 is output to the output shaft 19. At this time, the drive unit is in a state referred to as "First Mode: Three Elements (Lo)" shown on the left side in the velocity diagram in FIG. 3. In this case, when the speed of the engine which is connected to the ring gear is constant and the rotation speed of the motor (i.e., MG2: electric machine on the side from which driving force is output) which is connected to the sun gear is increased (shown by the upward-pointing arrow in the drawing), the rotation speed of the motor-generator (i.e., MG1: the electric machine on the side receiving the reaction torque of the engine) which is connected to the carrier decreases (shown by the downward-pointing broken arrow in the drawing) due to the differential relationship on the three-element planetary gear side. At this time, on the reduction planetary gear side, as the rotation speed of the motor that is connected to the sun gear increases, a decelerated rotation is output from the ring gear due to the reaction force support provided by the carrier being held stationary by application of the brake. Therefore, in this mode the output (OUT) speed continuously increases as the rotation speed of the motor (MG2) increases. The progression of this increase is shown in stages for convenience by encircled numerals 1 to 3 in the drawing. Of these, the output speed denoted by encircled numeral 3 is achieved when the rotation speed of the motor-generator (MG1) has decreased to zero.

### (2) Four-Element Mode

This mode is used during normal running. It is achieved by applying the clutch C-1 to couple the carrier C1 of the three-element planetary gear P1 to the carrier C2 of the reduction planetary gear P2 and inputting the differential rotation of the three-element planetary gear P1 to the carrier C2 of the reduction planetary gear P2, as well as inputting the rotation of the motor MG2 to the sun gear S2. In this mode, the rotation speed of the ring gear R2 increases as the rotation speed of the motor-generator (MG1) increases, by reducing the rotation speed of the motor MG2 using the engine speed as a reference, and the rotation of this ring gear R2 is output to the output shaft 19. At this time, the drive unit is in a state referred to as "Second Mode: Four Elements" shown in the middle in the velocity diagram in FIG. 3. In this case, when the engine speed is constant and the rotation speed of the motor (MG2) is reduced to lower than it is in third speed of the prior mode (shown by the downward-pointing arrow in the drawing), the output (OUT) speed continuously increases following an increase (shown by the upward-pointing broken arrow in the drawing) in the rotation speed of the motor-generator (MG1). In this case as well, the progression of the increase is shown in stages by encircled numerals 3 to 5 in the drawing. Of these, the output speed denoted by encircled numeral 5 is achieved when the rotation speeds of the engine (Eng.), the motor-generator (MG1), and the motor (MG2) are all the same.

### (3) Three-Element Hi Mode

This mode is characteristic of the present invention and is a mode used when running at a constant speed and during regeneration. In this mode, the clutch C-2 is applied so that the sun gear S2 and the carrier C2 of the reduction planetary gear P2 rotate at the same speed. As a result, the reduction planetary gear P2 locks up, with its three elements rotating together as a single unit. Therefore, when the motor MG2 is used to provide motor power at this time, the rotation output from the ring gear R2 to the output shaft 19 is the same as the rotation of the motor MG2. At this time, the drive unit is in a state referred to as "Third Mode: Three Elements (Hi)" shown on the right in the velocity diagram in FIG 3. The output (OUT) speed in this case also continuously increases. The progression of this increase is shown in stages by encircled numerals 5 to 8 in the drawing. In this mode, the rotation speed of the motor-generator (MG1) decreases (shown by the downward-pointing broken arrow in the drawing) as the rotation speed of the motor MG2 increases (shown by the upward-pointing arrow in the drawing) due to the differential relationship of the three-element planetary gear, becoming zero at the output speed indicated by encircled numeral 7 and reversing direction at the output speed indicated by encircled numeral 8.

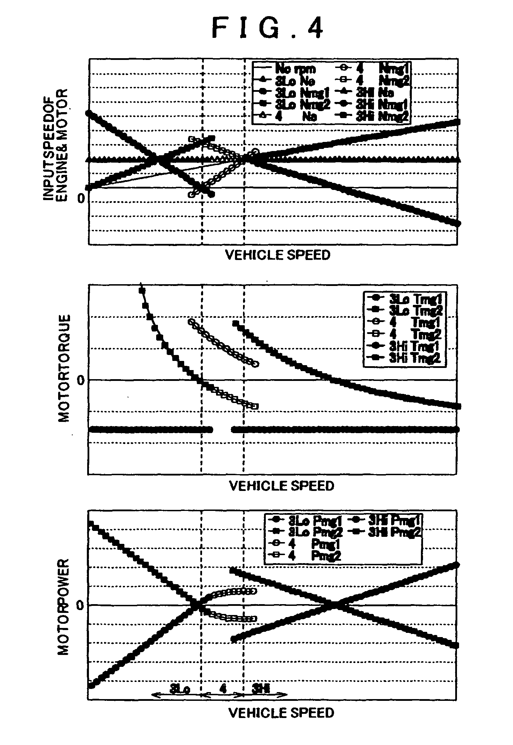

The relationships of the input speed, motor torque, and motor output with respect to the vehicle speed in the three modes are shown in the graph in FIG 4. In the first mode (i.e., the three-element Lo mode) shown in the left one of the three regions divided by two vertical dotted lines in the graph, when the engine speed Ne is constant, the rotation speed Nmg2 of the MG2 increases from zero at a constant gradient as the vehicle speed increases until it exceeds the engine speed, due to the above-mentioned relationship. The rotation speed Nmg1 of the MG1, on the other hand, decreases at a constant gradient from a speed higher than the engine speed to a speed lower than the engine speed. From this relationship, the output speed No increases at a constant gradient from zero to near engine speed. Moreover, with regard to the motor torque, the torque Tmg2 of the MG2 decreases at an increasingly slower rate as the vehicle speed increases. In contrast, the torque Tmg 1 of the MG1 is maintained at a constant value. With regard to motor output, the output Pmg2 of the MG2 decreases to zero at a constant gradient as the vehicle speed increases. The output Pmg1 of the MG1, on the other hand, increases to zero at a constant gradient as the vehicle speed increases.

Also, in the second mode (i.e., the four-element mode) shown in the middle one of the three regions between the two vertical dotted lines in the graph, similarly, when the engine speed Ne is constant, the rotation speed Nmg2 of the MG2 decreases from a given value at a constant gradient as the vehicle speed increases, and eventually becomes the same speed as the engine speed. The rotation speed Nmg1 of the MG1, on the other hand, increases at a constant gradient from a speed lower than the engine speed to the same speed as the engine speed. Moreover, with regard to the motor torque, the torque Tmg2 of the MG2 decreases at an increasingly slower rate as the vehicle speed increases. In contrast, the torque Tmg1 of the MG1 tends to decrease just like the torque Tmg2 of the MG2, but at a higher value than that of the torque Tmg2. With regard to motor output, the output Pmg1 of the MG1 increases at an increasingly slower rate as the vehicle speed increases. Conversely, the output Pmg2 of the MG2 decreases at an increasingly slower rate as the vehicle speed increases.

Furthermore, in the third mode (i.e., the three-element Hi mode) shown in the right one of the three regions divided by the two vertical dotted lines in the graph, similarly, when the engine speed Ne is constant, the rotation speed Nmg2 of the MG2 increases from the engine speed at a constant gradient as the vehicle speed increases. In contrast, the rotation speed Nmg1 of the MG1 decreases from the engine speed at a constant gradient. With regard to motor torque, the torque Tmg2 of the MG2 decreases at an increasingly slower rate as the vehicle speed increases, while the torque Tmg1 of the MG1 remains constant. With regard to motor output, the output Pmg2 of the MG2 decreases from a given value at a constant gradient as the vehicle speed increases, and eventually passes zero, after which it is in a regenerative region (i.e., after which the MG2 is in a regenerating state). The output Pmg1 of the MG1, on the other hand, increases from a given value in the regenerative region at a constant gradient as the vehicle speed increases, and eventually passes zero, after which it is in a powering region (i.e., after which the MG1 is in a powering state).

### (4) Mode Switching

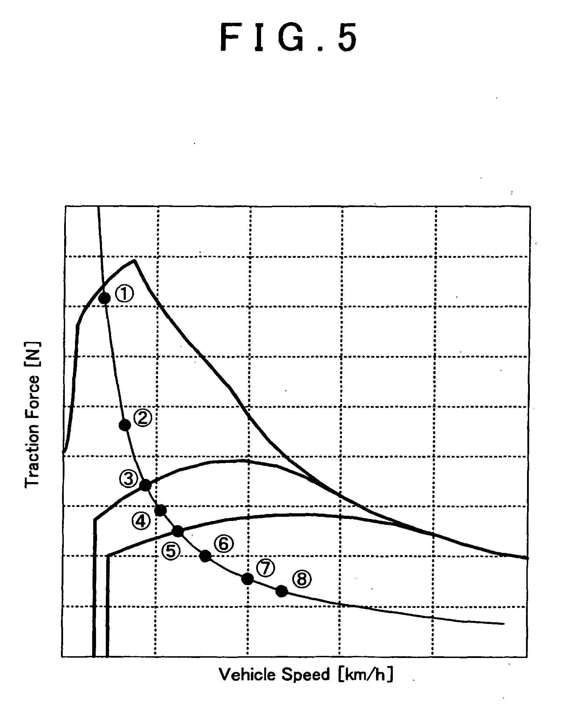

Switching of the modes is performed as shown in the switching map in FIG. 5. This switching map indicates the switching points, with the horizontal axis representing the vehicle speed and the vertical axis representing the driving force. As shown in the drawing, when accelerating during take-off, the three-element Lo mode is used to achieve a low speed/high torque state. When the desired driving force is small, the drive unit is switched early on at a low speed into the four-element mode and the three-element Hi mode, as is shown by the switching points with the bold solid lines in the drawing. As the desired driving torque increases, the switching point is shifted toward the high speed side. The thin line in the drawing shows a typical shift progression. As is shown by relating the output speeds in this progression to the speeds shown in FIG 3, the region including output speeds 1 to 3 is the three-element Lo mode region, the region including output speeds 3 to 5 is the four-element mode region, and the region including output speeds 5 to 8 is the three-element Hi mode region. Mode switching is performed at output speeds 3 and 5. When switching from the three-element Lo mode to the four-element mode in this case, a so-called change over of friction engagement elements is performed, in which the brake B-1 is released while the clutch C-1 is applied. At this time, as is evident from the speed changes shown in FIG 3 and the characteristics graph in FIG 4, the rotation speed of the motor-generator MG 1 is zero, and the rotation speeds of both the intermediate shaft 13 and the carrier C2 which is held stationary by application of the brake B-1 in the three-element Lo mode are also zero, so the clutch C-1 which couples these two together is applied while they are stationary. Therefore, using this characteristic, a change over when there is no rotational difference of the clutch friction member is possible, which reduces shift shock as well as the thermal load on the friction members. Next, when switching from the four-element mode (4) to the three-element Hi mode (3 Hi), the output speed No, the engine speed Ne, the MG 1 rotation speed Nmg1, and the MG2 rotation speed Nmg2 are all the same, as is evident from the characteristics graph in FIG 4. This switch is performed by a so-called clutch-to-clutch change over, in which the clutch C-1 is released and the clutch C-2 is applied. Using this characteristic, a change over when there is no rotational difference of the clutch friction members is possible. As a result, in this case as well, both shift shock and the thermal load on the friction members are able to be reduced.

As described in detail above, in this exemplary embodiment, it is possible to couple two gear elements of the reduction planetary gear P2 together by applying the clutch C-2, and thereby lock up the reduction planetary gear P2. As a result of this lock up, the recovery efficiency of deceleration energy during regeneration is able to be improved, as is the efficiency in the negative hybrid region, by running in a three-element direct drive mode when running at high vehicle speeds. In addition, the motor output required for powering is reduced compared with a case in which only two modes, i.e., the three-element reduction mode and the direct drive mode of the related art, are available, which enables the motor to be made smaller. Further, when switching from the three-element Lo mode to the four-element mode and from the four-element mode to the three-element Hi mode, the shifts can be made while there is no differential rotation of the clutches. As a result, both shift shock and the thermal load on the friction elements are reduced.

### [Second Embodiment]

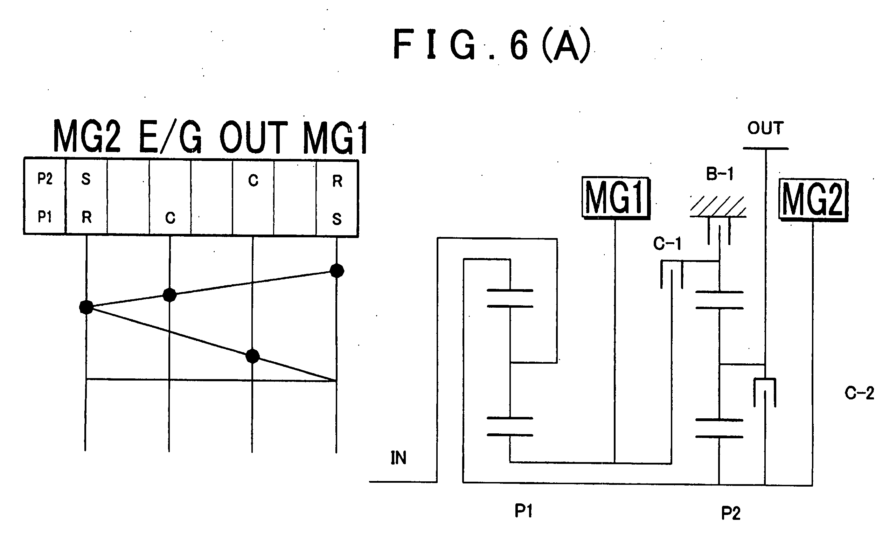

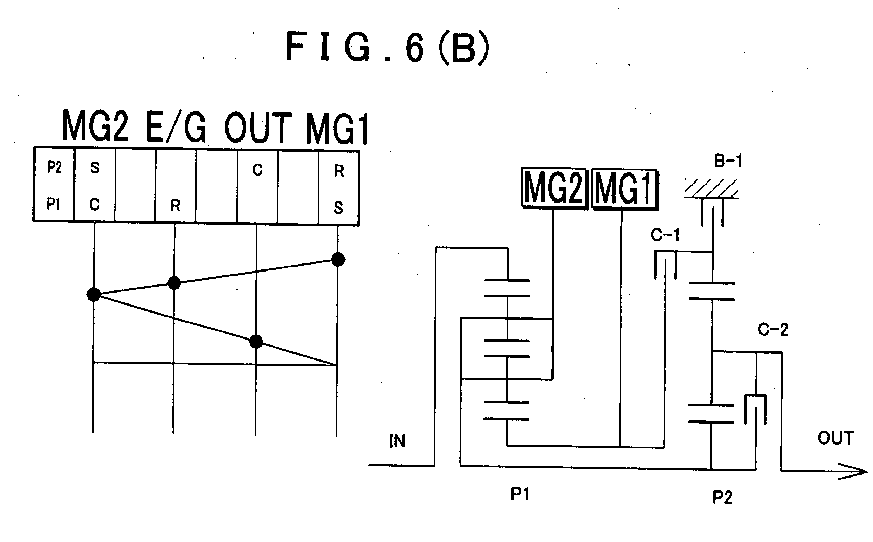

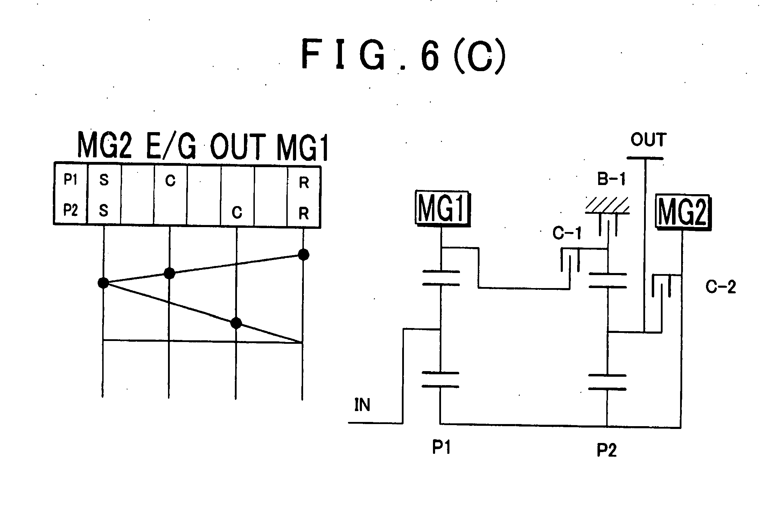

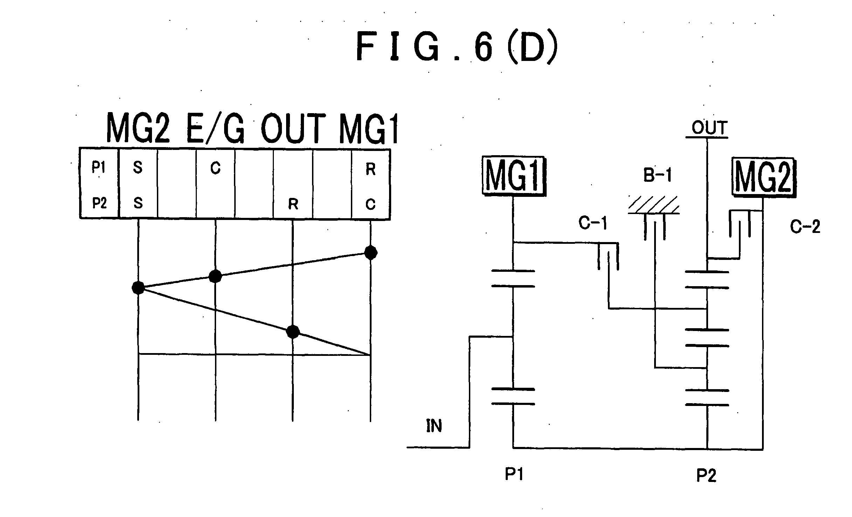

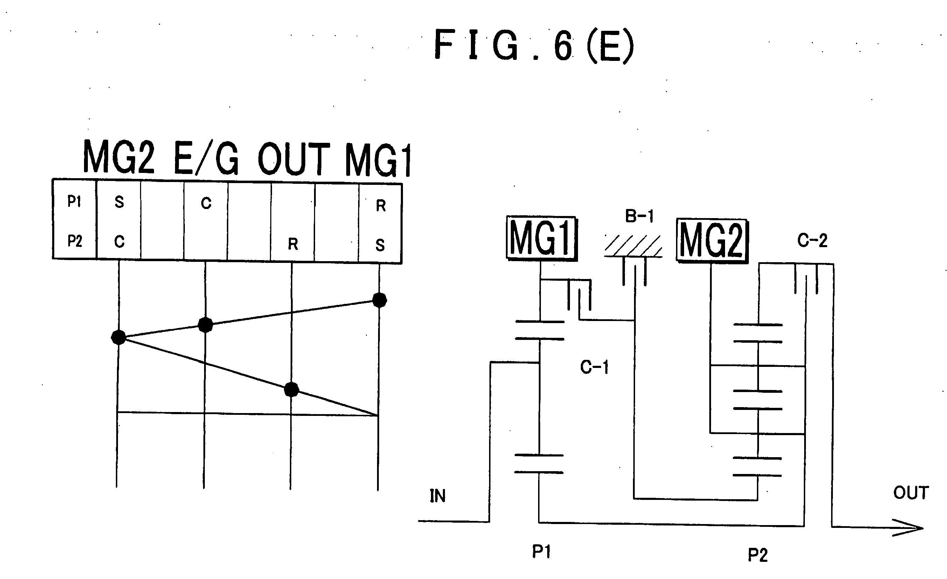

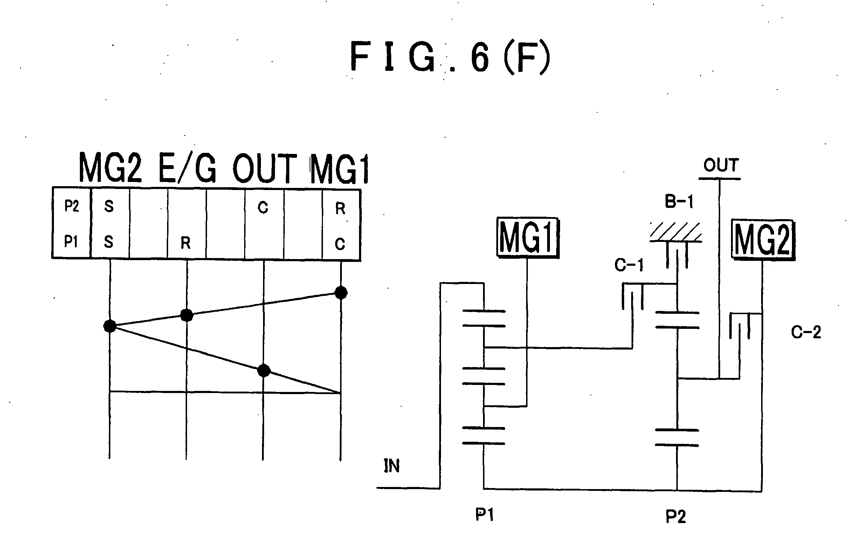

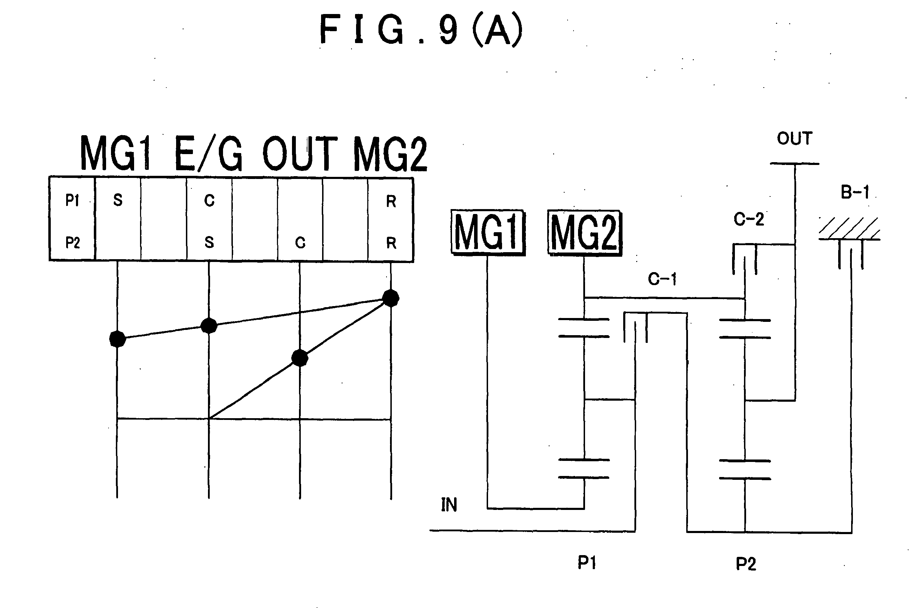

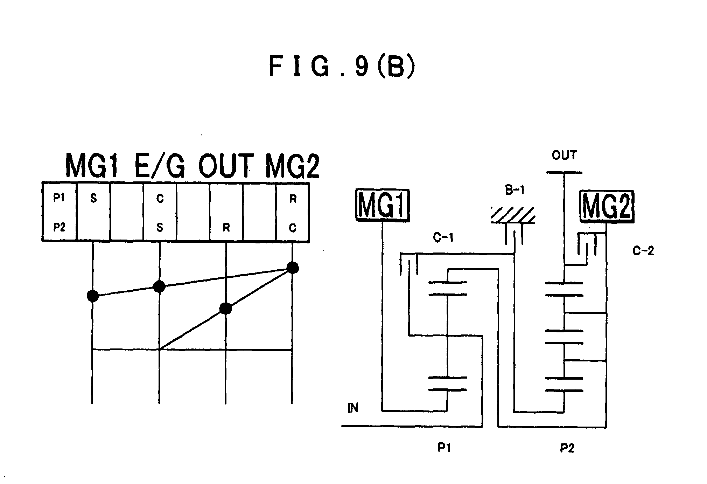

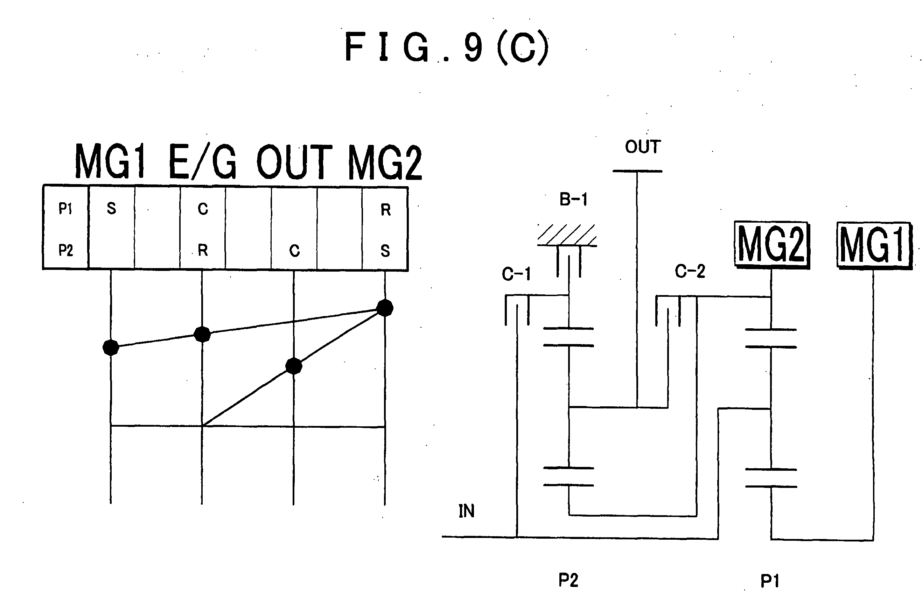

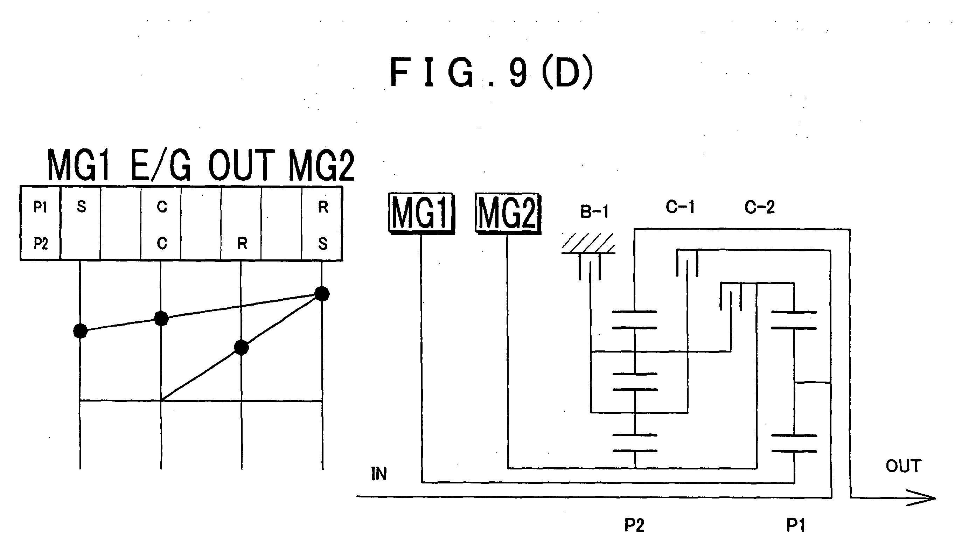

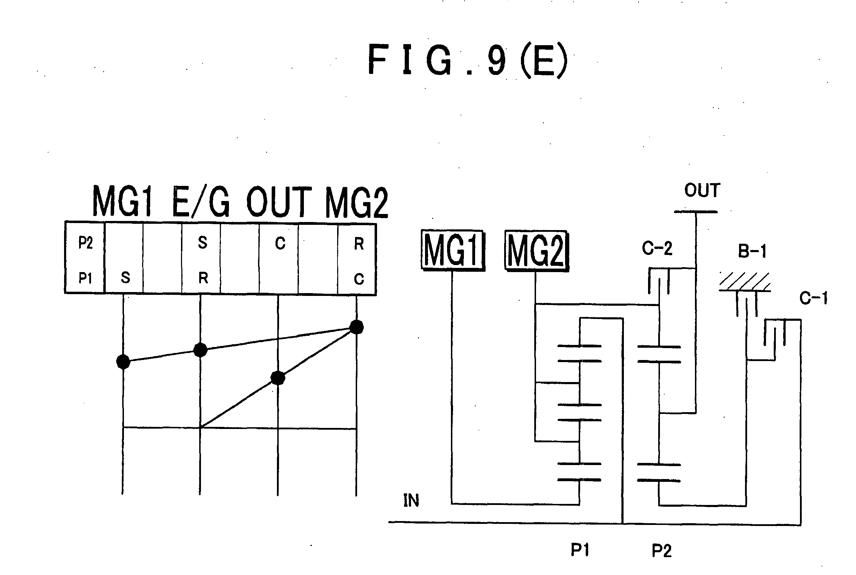

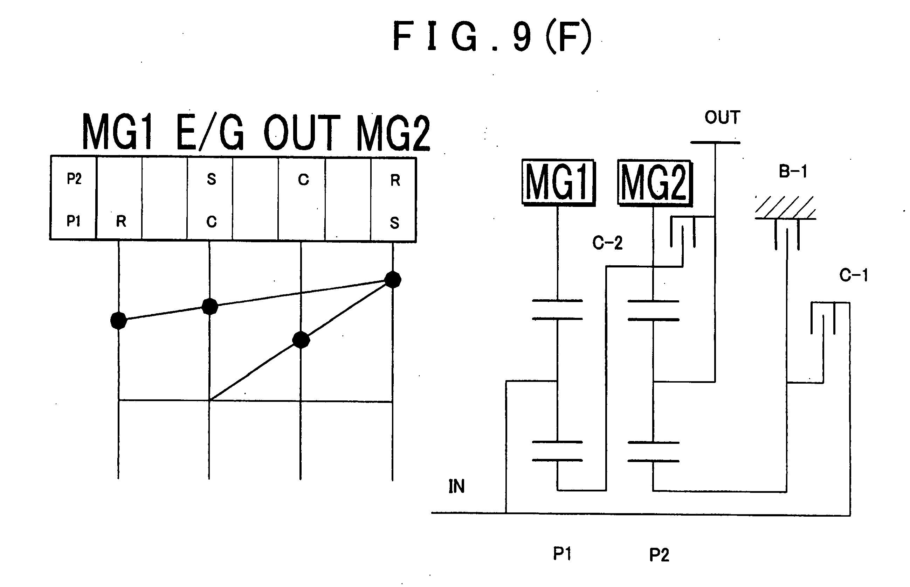

Examples of various gear train structures to which the present invention can be applied will now be described with reference to FIGS. 6 to 11. The examples shown in FIGS. 6 to 8 are modifications based on the gear train of the related art described in the beginning of this specification. The examples shown in FIGS. 9 to 11 are various modifications of a new kind of gear train which is different from that of the related art.

First, the example shown in FIG 6(A) has two single pinion type differential gear units. A first electric machine MG1 is arranged between these two differential gear units and a second electric machine MG2 is arranged on the axial end on the output side. A second friction engagement element (clutch) C-2 couples a sun gear and a carrier of the second differential gear unit (reduction planetary gear) P2 together. The carrier serves as the output. The connective relationships of the three-element and reduction planetary gears P1 and P2, the motor-generator MG1, the engine E/G, the output OUT, and the motor MG2 in this gear train are shown in chart form together with a velocity diagram, to the left of the drawing. The rows in the chart show the gear elements of the two planetary gears P 1 and P2, and the columns show the connective relationships of those gear elements. In FIGS. 6 to 8, the connection of elements shown in the left-most column is a direct connection, and the connection of elements shown in the right-most column is a connection via the first friction engagement element (clutch) C-1. In FIGS. 9 to 11, the connection of elements shown in the right-most column is a direct connection, and the connection of elements shown in the left-most column is a connection with the motor-generator MG1. The connection shown in the second column from the left is a connection with the engine E/G via the clutch C-1. Incidentally in this example, the S (sun gear) of the P2 (reduction planetary gear) which is connected to the MG2 (motor) is directly connected to the R (ring gear) of the P1 (three-element planetary gear). The C (carrier) of the P1 is connected to the E/G (engine), the C (carrier) of the P2 is the OUT (output), and the R (ring gear) of the P2 which is connected to the MG2 (motor) is coupled to the S (sun gear) of the P1 via the C-1 (clutch). The same system of notation is used in all embodiments hereinafter. This example differs from the previous embodiment in that the ring gear of the reduction planetary gear P2 is coupled to the brake B-1 and thereby made a reaction element, and the motor MG2 is arranged on the axial end. Therefore, the input and output are not coaxial; rather the output (OUT) is a counter gear on a counter shaft suitable for a FF vehicle.

The example shown in FIG. 6(B) is an example in which a double pinion planetary gear is used as a first differential gear unit, and a single pinion planetary gear is used as the second differential gear unit. The second friction engagement element (clutch) C-2 in this case as well couples the carrier and the sun gear of the reduction planetary gear P2 together. The carrier serves as the output. In this example, the ring gear of the reduction planetary gear P2 is coupled to the brake B-1 and thereby made a reaction element. The second electric machine (motor) MG2 and the first electric machine (motor-generator) MG1 are both arranged between the three-element planetary gear P1 and the reduction planetary gear P2. Therefore, coaxial output from the reduction planetary gear P2 is possible, making it suitable for an FR (front-engine rear-wheel drive) vehicle in which the input and output are coaxial. The output (OUT) can also be used in an FF (front-engine front-wheel drive) vehicle.

Similarly, various gear train configurations are possible depending on the type of first differential gear unit and second differential gear unit, the positional and connective relationships of both electric machines with respect to those differential gear units, and the selection of gear elements that are connected by the second friction engagement element. To avoid redundancy, the same system of notation will be used in each embodiment and only the positional relationships, the types of differential gear units, and the connective relationships not illustrated in the chart will be described.

In the example shown in FIG 6(C), single pinion planetary gears are used as both the first differential gear unit P1 and the second differential gear unit P2. The carrier and the sun gear of the second differential gear unit P2 are coupled together via the second friction engagement element C-2. In this case, the ring gear of the second differential gear unit P2 is held stationary by the third friction engagement element B-1.

In the example shown in FIG 6(D), a single pinion planetary gear is used as the first differential gear unit P1 and a double pinion planetary gear is used as the second differential gear unit P2. The ring gear and the sun gear of the second differential gear unit P2 are coupled together via the second friction engagement element C-2. In this case, the carrier of the second differential gear unit P2 is held stationary by the third friction engagement element B-1.

In the example shown in FIG 6(E), a single pinion planetary gear is used as the first differential gear unit P1 and a double pinion planetary gear is used as the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG 6(F), a double pinion planetary gear is used as the first differential gear unit P1 and a single pinion planetary gear is used as the second differential gear unit P2. The carrier and the sun gear of the second differential gear unit P2 are coupled together via the second friction engagement element C-2. In this case, the ring gear of the second differential gear unit P2 is held stationary by the third friction engagement element B-1.

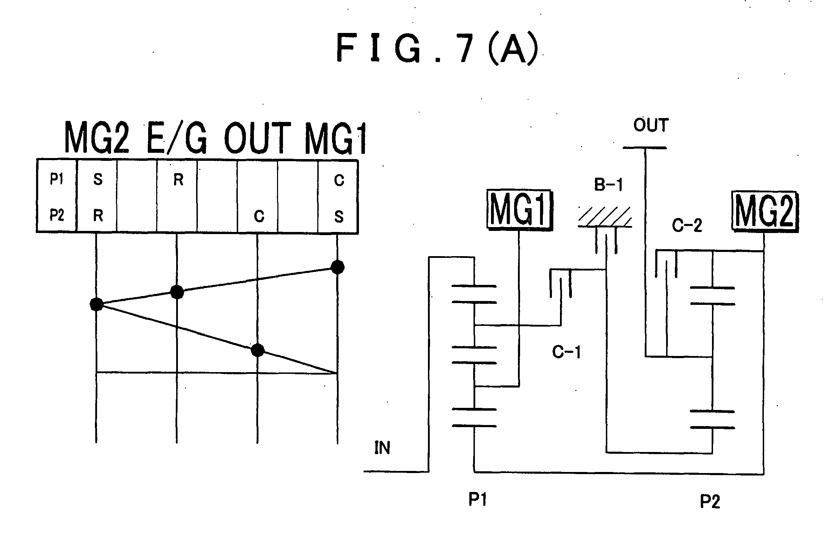

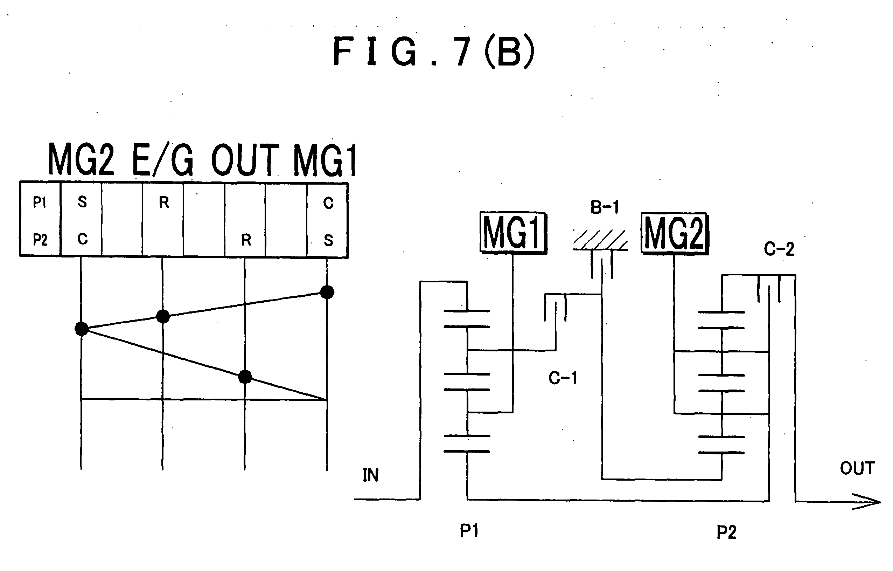

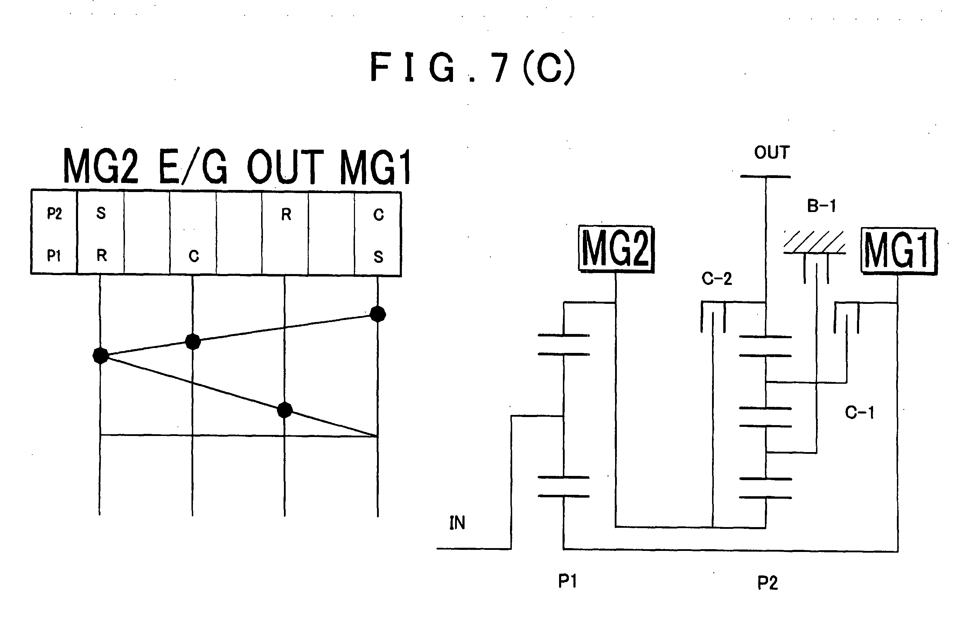

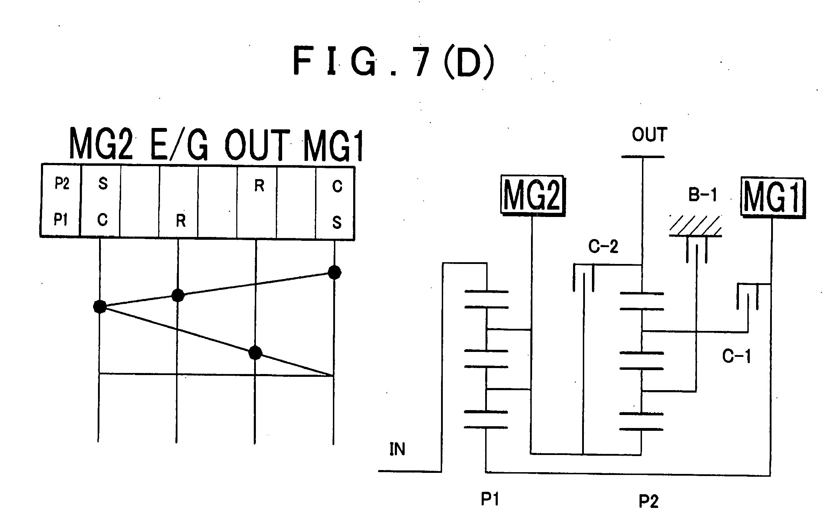

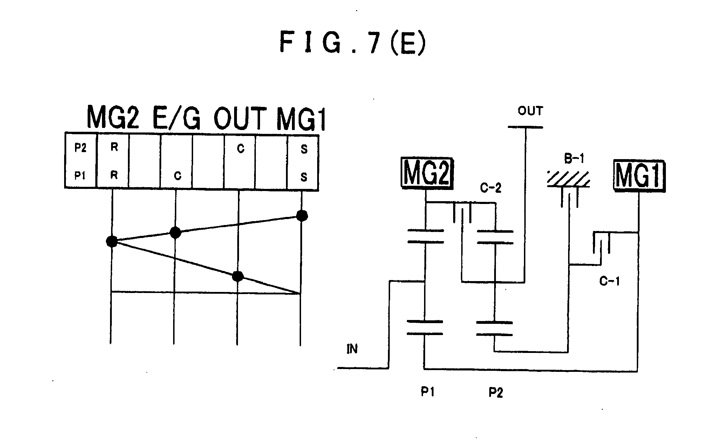

In the example shown in FIG 7(A) which follows, a double pinion planetary gear is used as the first differential gear unit P1 and a single pinion planetary gear is used as the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG. 7(B), double pinion planetary gears are used as both the first differential gear unit P1 and the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG. 7(C), a single pinion planetary gear is used as the first differential gear unit P1 and a double pinion planetary gear is used as the second differential gear unit P2. The ring gear and the sun gear of the second differential gear unit P2 are coupled together via the second friction engagement element C-2. In this case, the carrier of the second differential gear unit P2 is held stationary by the third friction engagement element B-1.

In the example shown in FIG. 7(D), double pinion planetary gears are used as both the first differential gear unit P1 and the second differential gear unit P2. The ring gear and the sun gear of the second differential gear unit P2 are coupled together via the second friction engagement element C-2. In this case, the carrier of the second differential gear unit P2 is held stationary by the third friction engagement element B-1.

In the example shown in FIG. 7(E), single pinion planetary gears are used as both the first differential gear unit P1 and the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

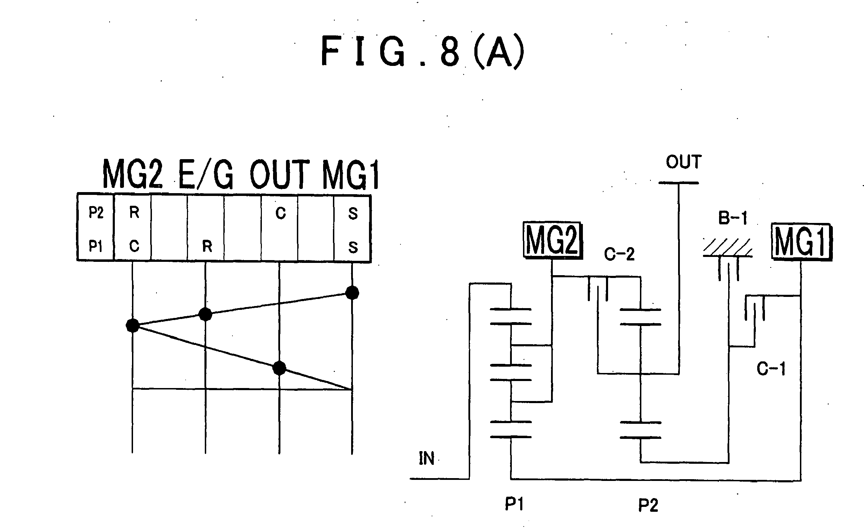

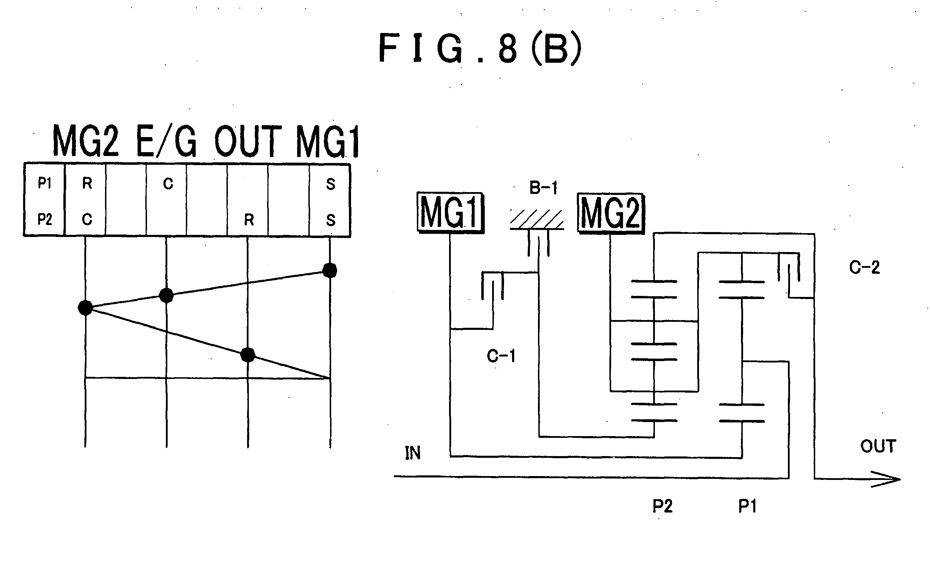

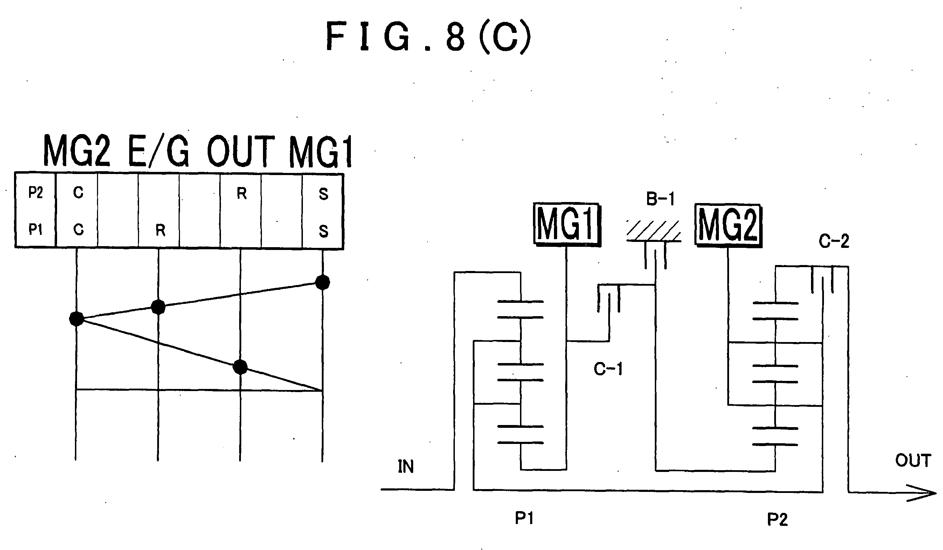

In the example shown in FIG 8(A) which follows, a double pinion planetary gear is used as the first differential gear unit P1 and a single pinion planetary gear is used as the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG. 8(B), a single pinion planetary gear is used as the first differential gear unit P1 and a double pinion planetary gear is used as the second differential gear unit P2. Compared with the previous examples, the positional relationship of the planetary gears in this example is reversed with respect to input and output. In this case, the ring gear and the carrier of the second differential gear unit P2 are coupled together via the second friction engagement element C-2. In this case, the sun gear of the second differential gear unit P2 is held stationary by the third friction engagement element B-1.

In the example shown in FIG 8(C), double pinion planetary gears are used as both the first differential gear unit P1 and the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the drive trains shown in FIGS. 6 to 8 of the foregoing embodiments, the switch from the three-element Lo mode (3 Lo) to the four-element mode (4) is performed when the rotation speed of the MG 1 is zero, as described above. Therefore, by applying the clutch C-1 to switch modes in this state, it is possible to shift when there is no rotation difference of the clutch, just as when the switch from the four-element mode to the three-element Hi mode is performed by a change over of the brake B-1 and the clutch C-1. As a result, both shift shock and the thermal load on the friction members are able to be reduced.

In the example shown in FIG. 9(A) which follows, single pinion planetary gears are used as both the first differential gear unit P1 and the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG 9(B), a single pinion planetary gear is used as the first differential gear unit P1 and a double pinion planetary gear is used as the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG 9(C), single pinion planetary gears are used as both the first differential gear unit P1 and the second differential gear unit P2. The positional relationship of the planetary gears in this example is reversed with respect to input and output. In this case, the carrier and the sun gear of the second differential gear unit P2 are coupled together via the second friction engagement element C-2. In this case, the ring gear of the second differential gear unit P2 is held stationary by the third friction engagement element B-1.

In the example shown in FIG 9(D), a single pinion planetary gear is used as the first differential gear unit P1 and a double pinion planetary gear is used as the second differential gear unit P2. The positional relationship of the planetary gears in this example is reversed with respect to input and output. In this case, the carrier and the sun gear of the second differential gear unit P2 are coupled together via the second friction engagement element C-2. In this case, the carrier of the second differential gear unit P2 is held stationary by the third friction engagement element B-1.

In the example shown in FIG 9(E), a double pinion planetary gear is used as the first differential gear unit P1 and a single pinion planetary gear is used as the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG 9(F), single pinion planetary gears are used as both the first differential gear unit P1 and the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

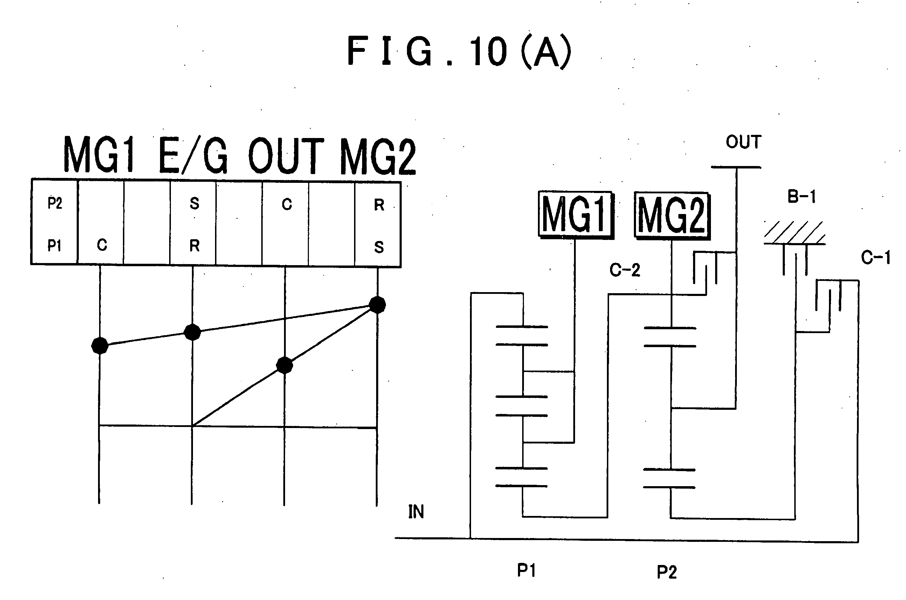

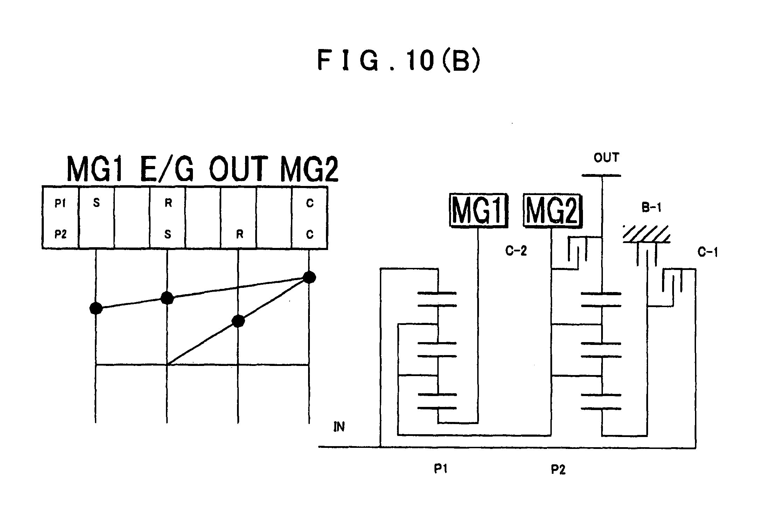

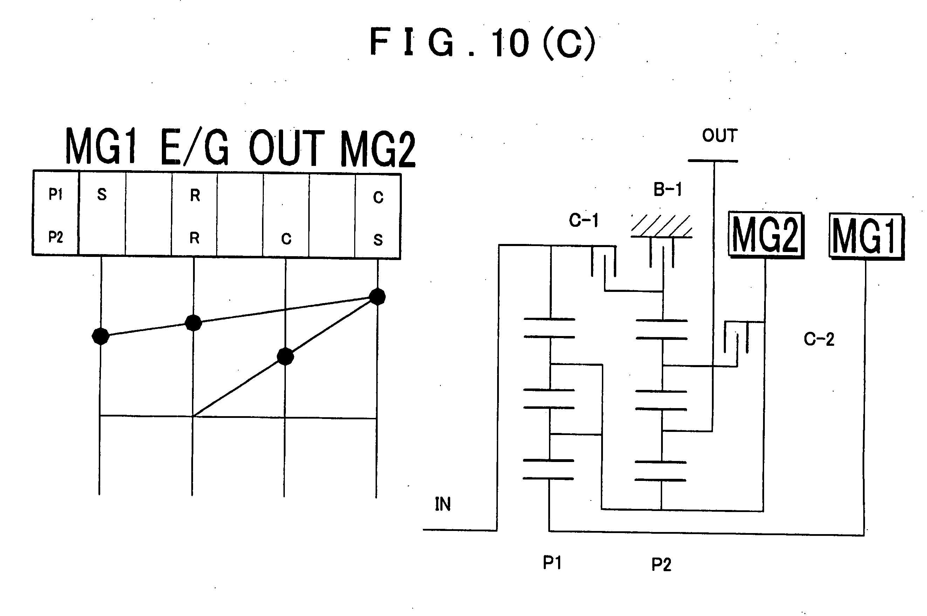

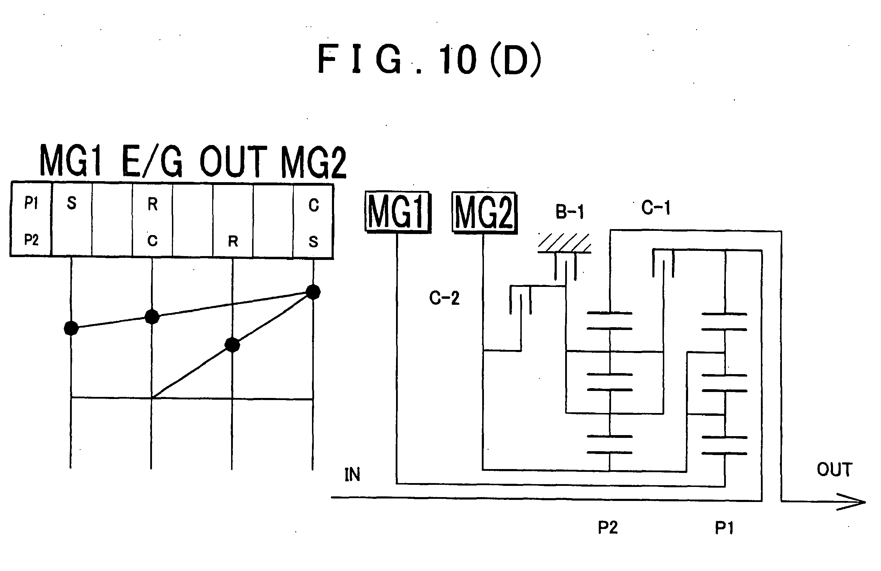

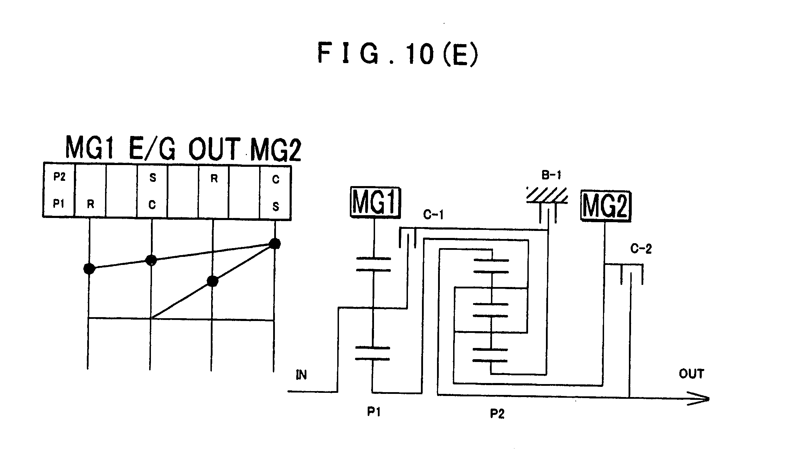

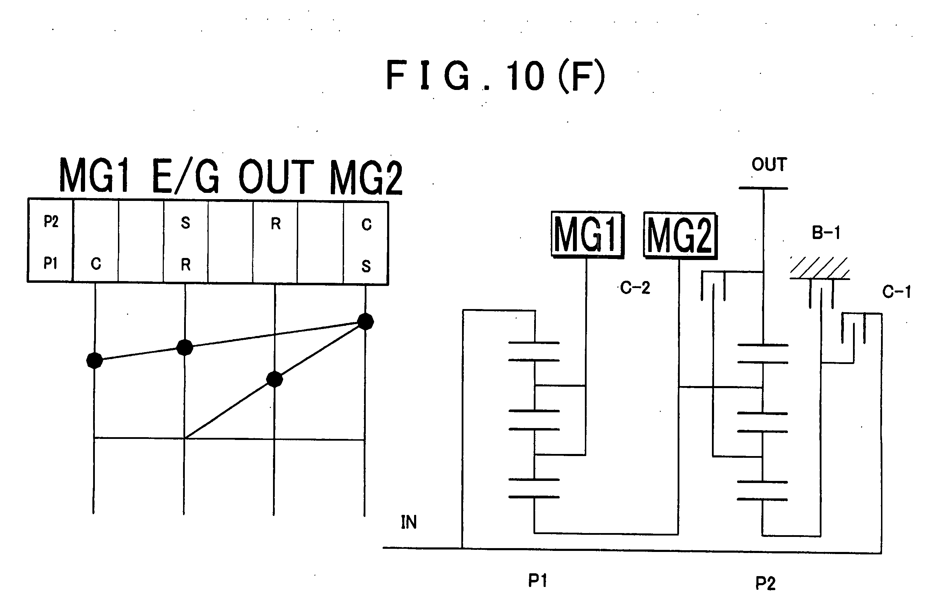

In the example shown in FIG 10(A) which follows, a double pinion planetary gear is used as the first differential gear unit P1 and a single pinion planetary gear is used as the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG 10(B), double pinion planetary gears are used as both the first differential gear unit P1 and the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG 10(C), double pinion planetary gears are used as both the first differential gear unit P1 and the second differential gear unit P2. The carrier and the sun gear of the second differential gear unit P2 are coupled together via the second friction engagement element C-2. In this case, the ring gear of the second differential gear unit P2 is held stationary by the third friction engagement element B-1.

In the example shown in FIG 10(D), double pinion planetary gears are used as both the first differential gear unit P1 and the second differential gear unit P2. The positional relationship of the planetary gears in this example is reversed with respect to input and output. In this case, the carrier and the sun gear of the second differential gear unit P2 are coupled together via the second friction engagement element C-2. In this case, the carrier of the second differential gear unit P2 is held stationary by the third friction engagement element B-1.

In the example shown in FIG 10(E), a single pinion planetary gear is used as the first differential gear unit P1 and a double pinion planetary gear is used as the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

In the example shown in FIG 10(F), double pinion planetary gears are used as both the first differential gear unit P1 and the second differential gear unit P2. The ring gear and the carrier of the second differential gear unit P2 are coupled together via the second friction engagement element C-2. In this case, the sun gear of the second differential gear unit P2 is held stationary by the third friction engagement element B-1.

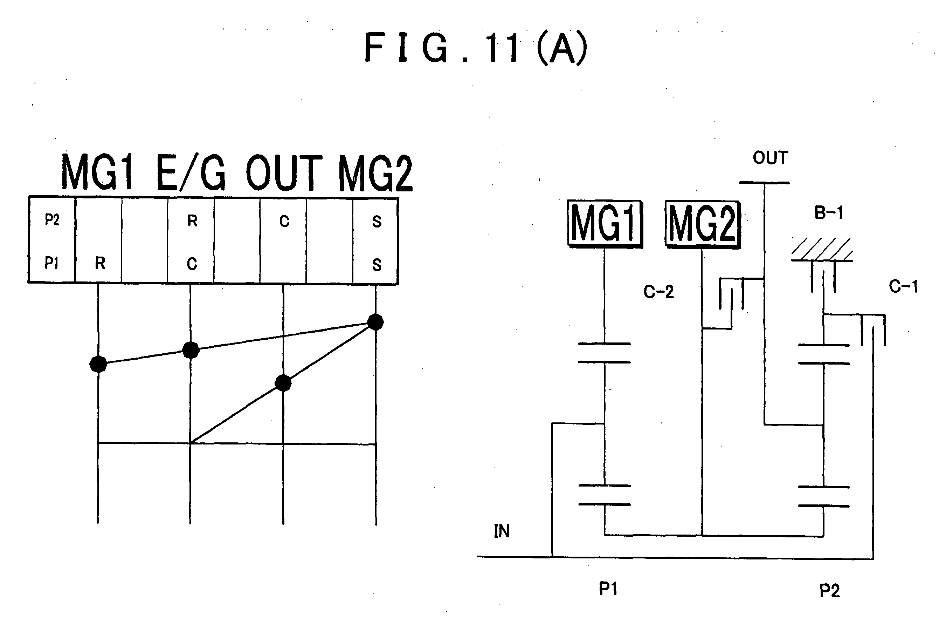

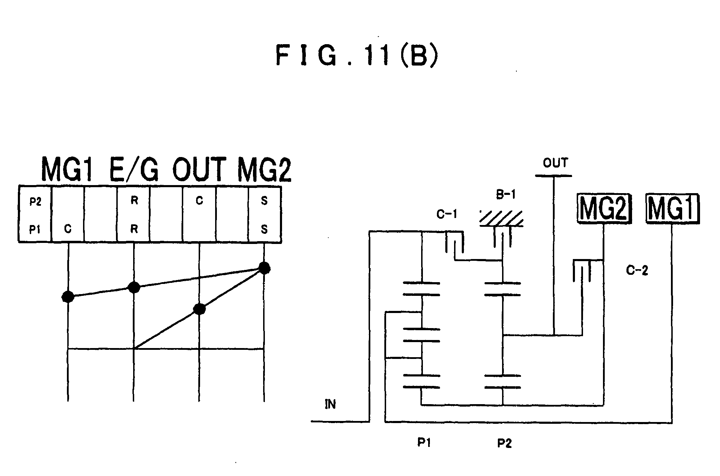

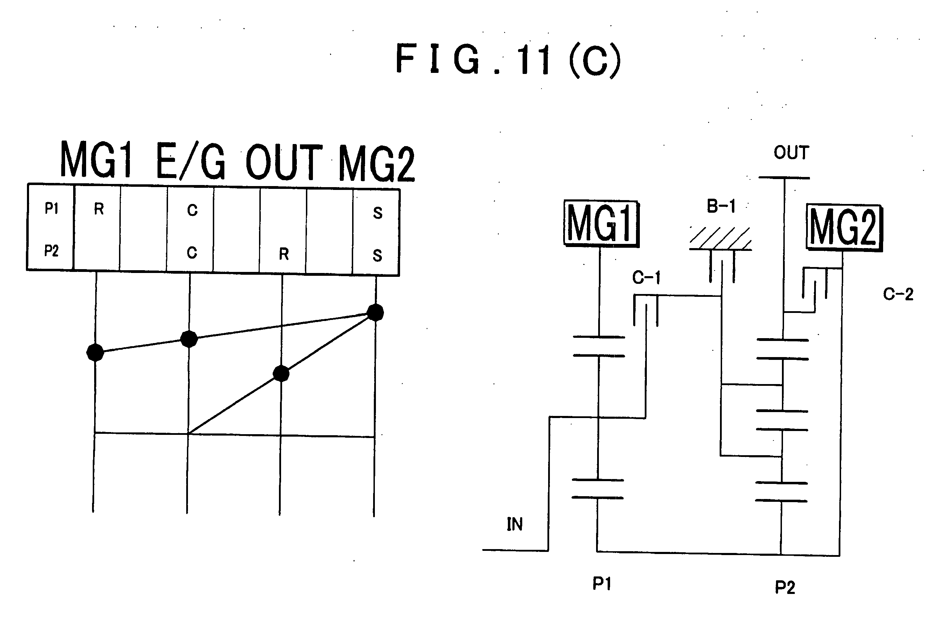

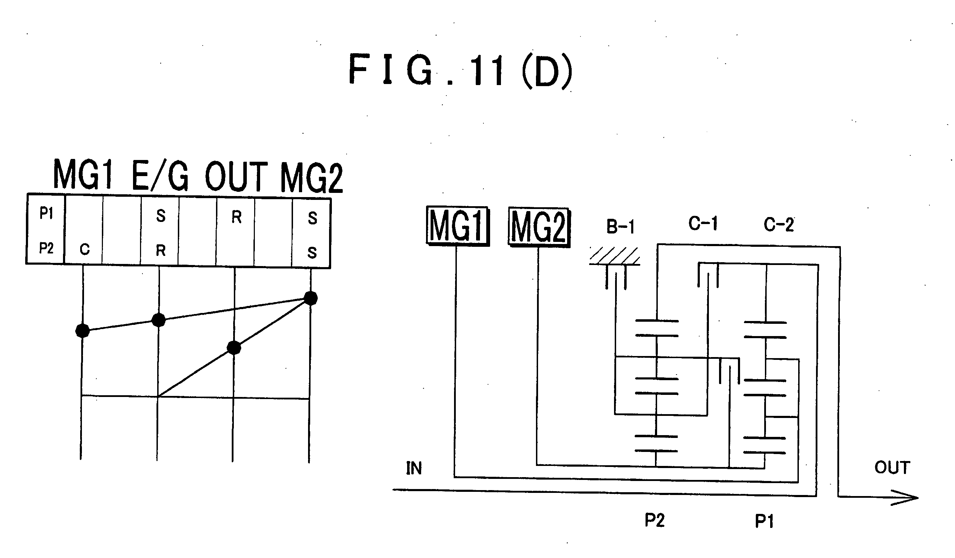

In the example shown in FIG. 11(A) which follows, single pinion planetary gears are used as both the first differential gear unit P1 and the second differential gear unit P2. The carrier and the sun gear of the second differential gear unit P2 are coupled together via the second friction engagement element C-2. In this case, the ring gear of the second differential gear unit P2 is held stationary by the third friction engagement element B-1.

In the example shown in FIG 11(B), a double pinion planetary gear is used as the first differential gear unit P1 and a single pinion planetary gear is used as the second differential gear unit P2. The carrier and the sun gear of the second differential gear unit P2 are coupled together via the second friction engagement element C-2. In this case, the ring gear of the second differential gear unit P2 is held stationary by the third friction engagement element B-1.

In the example shown in FIG 11 (C), a single pinion planetary gear is used as the first differential gear unit P1 and a double pinion planetary gear is used as the second differential gear unit P2. The ring gear and the sun gear of the second differential gear unit P2 are coupled together via the second friction engagement element C-2. In this case, the carrier of the second differential gear unit P2 is held stationary by the third friction engagement element B-1.

In the example shown in FIG 11(D), double pinion planetary gears are used as both the first differential gear unit P1 and the second differential gear unit P2. The positional relationship of the planetary gears in this example is reversed with respect to input and output. In this case, the carrier and the sun gear of the second differential gear unit P2 are coupled together via the second friction engagement element C-2. In this case, the carrier of the second differential gear unit P2 is held stationary by the third friction engagement element B-1.

In each of the foregoing embodiments, the second electric machine MG2 is directly connected to the second differential gear unit P2. Alternatively, however, the second electric machine MG2 may also be connected to the second differential gear unit P2 via a reduction mechanism. In this case, when the reduction mechanism is a planetary gear set, one of its gear elements is held stationary to provide reaction support, another of its gear elements is connected to the second electric machine MG2, and another of its gear elements is connected to a gear element of the second differential gear unit P2, which is connected to the first electric machine, and a gear element other than a gear element that is directly connected to the gear element of the first differential gear unit. As an example of this, a structure can be employed in which, for example, the sun gear of the planetary gear set is connected to the second electric machine MG2, the carrier is held stationary, and the ring gear is coupled to the carrier of the second differential gear unit P2.

## Claims

1. A hybrid drive unit comprising:
an input member (12) which receives a driving force from an engine;
an output member (19) which outputs the driving force to a wheel;
a first electric machine (MG1) and a second electric machine;
a first differential gear unit (P1) and a second differential gear unit (P2) each including at least three gear elements (S1, R1, C1; S2, R2, C2); and
at least three friction engagement elements, one being a first friction engagement element (C-1), one being a second friction engagement element (C-2), and one being a third friction engagement element (B-1),
wherein one of the three gear elements of the first differential gear unit (P1) is connected to the input member (12), another of the three gear elements of the first differential gear unit (P1) is connected to the first electric machine, and another of the gear elements of the first differential gear unit (P1) is connected to the second electric machine;
one (R2) of the gear elements of the second differential gear unit (P2) is connected to the output member (19), another of the three gear elements of the second differential gear unit (P2) is connected to the third friction engagement element (B-1), and another of the gear elements of the second differential gear unit (P2) is connected to the second electric machine;
**characterized in that**
the gear element of the second differential gear unit (P2) which is connected to the third friction engagement element (B-1) is coupled, via the first friction engagement element (C-1), to one of the gear elements of the first differential gear unit, excluding the gear element that is directly connected to the second differential gear unit; and
two of the gear elements of the second differential gear unit (P2) are interconnected via the second friction engagement element (C-2).

2. The hybrid drive unit according to claim 1, wherein the third friction engagement element (B-1)reduces, by application thereof, a rotation speed of the second electric machine (MG2).

3. The hybrid drive unit according to one of the claims 1 or 2, wherein the second friction engagement element (C-2) rotates, by application thereof, the output member (19) and the second electric machine (MG2) at the same rotation speed.

4. The hybrid drive unit according to one of the claims 1 to 3, wherein when the output member (19) is rotating and the rotation speed of the first electric machine (MG1) is substantially zero, the third friction engagement element (B-1) is released and the first friction engagement element (C-1) is applied.

5. The hybrid drive unit according to one of the claims 1 to 4, wherein when the output member (19) is rotating and the rotation speeds of at least two from among the input member (12), the output member (19), the first electric machine (MG2), and the second electric machine (MG2) are substantially the same, the first friction engagement element (C-1) is released and the second friction engagement element (C-2) is applied.

6. The hybrid drive unit according to one of the claims 1 to 5, wherein the first differential gear unit (P1) and the second differential gear unit (P2) are gear units having four degrees of freedom by application of the first friction engagement element (C-1), and the input member (12), the output member (19), the first electric machine, and the second electric machine (MG2) are connected to each gear element of the gear units having the four degrees of freedom.

7. The hybrid drive unit according to one of the claims 1 to 6, wherein the gear element of the first differential gear unit, which is connected to the first electric machine, is coupled, via the first friction engagement element (C-1), to the gear element of the second differential gear unit, which is coupled to the third friction engagement element (B-1) .

8. The hybrid drive unit according to one of the claims 1 to 6, wherein the gear element of the first differential gear unit, which is connected to the input member (12), is coupled, via the first friction engagement element (C-1), to the gear element of the second differential gear unit, which is coupled to the third friction engagement element (B-1).

## Patentansprüche

1. Hybridantriebseinheit mit:
einem Eingangselement (12), das eine Antriebskraft von einem Verbrennungsmotor aufnimmt;
einem Ausgangselement (19), das die Antriebskraft zu einem Rad ausgibt;
einem ersten elektrischen Gerät (MG1) und einem zweiten elektrischen Gerät;
einer ersten Differentialgetriebeeinheit (P1) und einer zweiten Differentialgetriebeeinheit (P2), die jeweils zumindest drei Getriebeelemente (S1, R1, C1; S2, R2, C2) haben; und
zumindest drei Reibungseingriffselementen, wobei eines ein erstes Reibungseingriffselement (C-1), eines ein zweites Reibungseingriffselement (C-2) und eines ein drittes Reibungseingriffselement (B-1) ist,
wobei eines der drei Getriebeelemente von der ersten Differentialgetriebeeinheit (P1) mit dem Eingangselement (12) verbunden ist, ein anderes der drei Getriebeelemente von der ersten Differentialgetriebeeinheit (P1) mit dem ersten elektrischen Gerät verbunden ist und ein anderes der Getriebeelemente von der ersten Differentialgetriebeeinheit (P1) mit dem zweiten elektrischen Gerät verbunden ist;
eines (R2) der Getriebeelemente von der zweiten Differentialgetriebeeinheit (P2) mit dem Ausgangselement (19) verbunden ist, ein anderes der drei Getriebeelemente von der zweiten Differentialgetriebeeinheit (P2) mit dem dritten Reibungseingriffselement (B-1) verbunden ist und ein anderes der Getriebeelemente von der zweiten Differentialgetriebeeinheit (P2) mit dem zweiten elektrischen Gerät verbunden ist;
**dadurch gekennzeichnet, dass**
das Getriebeelement von der zweiten Differentialgetriebeeinheit (P2), das mit dem dritten Reibungseingriffselement (B-1) verbunden ist, über das erste Reibungseingriffselement (C-1) mit einem der Getriebeelemente von der ersten Differentialgetriebeeinheit mit Ausnahme von dem Getriebeelement gekuppelt ist, das direkt mit der zweiten Differentialgetriebeeinheit verbunden ist; und
zwei der Getriebeelemente von der zweiten Differentialgetriebeeinheit (B2) über das zweite Reibungseingriffselement (C-2) miteinander verbunden sind.

2. Hybridantriebseinheit gemäß Anspruch 1, wobei
das dritte Reibungseingriffselement (B-1) durch seine Anwendung die Drehzahl von dem zweiten elektrischen Gerät (MG2) verringert.

3. Hybridantriebseinheit gemäß einem der Ansprüche 1 oder 2, wobei
das zweite Reibungseingriffselement (C-2) durch seine Anwendung das Ausgangselement (19) und das zweite elektrische Gerät (MG2) bei der gleichen Drehzahl dreht.

4. Hybridantriebseinheit gemäß einem der Ansprüche 1 bis 3, wobei
wenn das Ausgangselement (19) sich dreht und die Drehzahl von dem ersten elektrischen Gerät (MG1) im Wesentlichen Null ist, das dritte Reibungseingriffselement (B-1) freigegeben ist und das erste Reibungseingriffselement (C-1) angewendet wird.

5. Hybridantriebseinheit gemäß einem der Ansprüche 1 bis 4, wobei
wenn das Ausgangselement (19) sich dreht und die Drehzahlen von zumindest zwei Elementen aus der Gruppe, die aus dem Eingangselement (12), dem Ausgangselement (19), dem ersten elektrischen Gerät (MG2) und dem zweiten elektrischen Gerät (MG2) besteht, im Wesentlichen gleich sind, das erste Reibungseingriffselement (C-1) freigegeben ist und das zweite Reibungseingriffselement (C-2) angewendet wird.

6. Hybridantriebseinheit gemäß einem der Ansprüche 1 bis 5, wobei
die erste Differentialgetriebeeinheit (P1) und die zweite Differentialgetriebeeinheit (P2) Getriebeeinheiten mit vier Freiheitsgraden sind durch die Anwendung des ersten Reibungseingriffselementes (C-1), und das Eingangselement (12), das Ausgangselement (19), das erste elektrische Gerät und das zweite elektrische Gerät (MG2) mit jedem Getriebeelement der Getriebeeinheiten, die vier Freiheitsgrade haben, verbunden sind.

7. Hybridantriebseinheit gemäß einem der Ansprüche 1 bis 6, wobei
das Getriebeelement von der ersten Differentialgetriebeeinheit, das mit dem ersten elektrischen Gerät verbunden ist, über das erste Reibungseingriffselement (C-1) mit dem Getriebeelement der zweiten Differentialgetriebeeinheit gekuppelt ist, das mit dem dritten Reibungseingriffselement (B-1) gekuppelt ist.

8. Hybridantriebseinheit gemäß einem der Ansprüche 1 bis 6, wobei
das Getriebeelement von der ersten Differentialgetriebeeinheit, das mit dem Eingangselement (12) verbunden ist, über das erste Reibungseingriffselement (C-1) mit dem Getriebeelement der zweiten Differentialgetriebeeinheit gekuppelt ist, das mit dem dritten Reibungseingriffselement (B-1) gekuppelt ist.

## Revendications

1. Unité de transmission hybride comprenant :
un organe d'entrée (12) qui reçoit une force motrice d'un moteur ;
un organe de sortie (19) qui délivre en sortie la force motrice à une roue ;
une première machine électrique (MG1) et une seconde machine électrique ;
un premier différentiel (P1) et un second différentiel (P2) comprenant chacun au moins trois éléments d'engrenage (S1, R1, C1 ; S2, R2, C2) ; et
au moins trois éléments de prise par frottement, dont un premier élément de prise par frottement (C-1), un deuxième élément de prise par frottement (C-2) et un troisième élément de prise par frottement (B-1),
où l'un des trois éléments d'engrenage du premier différentiel (P1) est couplé à l'organe d'entrée (12), un autre des trois éléments d'engrenage du premier différentiel (P1) est couplé à la première machine électrique, et un autre des trois éléments d'engrenage du premier différentiel (P1) est couplé à la seconde machine électrique ;
un (R2) des éléments d'engrenage du second différentiel (P2) est couplé à l'organe de sortie (19), un autre des trois éléments d'engrenage du second différentiel (P2) est couplé au troisième élément de prise par frottement (B-1), et un autre des éléments d'engrenage du second différentiel (P2) est couplé à la seconde machine électrique ;
**caractérisée en ce que**
l'élément d'engrenage du second différentiel (P2) qui est couplé au troisième élément de prise par frottement (B-1) est accouplé, via le premier élément de prise par frottement (C-1), à l'un des éléments d'engrenage du premier différentiel, à l'exclusion de l'élément d'engrenage qui est directement couplé au second différentiel ; et
deux des éléments d'engrenage du second différentiel (P2) sont reliés via le deuxième élément de prise par frottement (C-2).

2. Unité de transmission hybride selon la revendication 1, dans laquelle le troisième élément de prise par frottement (B-1) réduit, par son application, une vitesse de rotation de la seconde machine électrique (MG2).

3. Unité de transmission hybride selon l'une des revendications 1 et 2, dans laquelle le deuxième élément de prise par frottement (C-2) fait tourner, par son application, l'organe de sortie (19) et la seconde machine électrique (MG2) avec la même vitesse de rotation.

4. Unité de transmission hybride selon l'une des revendications 1 à 3, dans laquelle, quand l'organe de sortie (19) tourne et que la vitesse de rotation de la première machine électrique (MG1) est sensiblement nulle, le troisième élément de prise par frottement (B-1) est libéré et le premier élément de prise par frottement (C-1) est appliqué.

5. Unité de transmission hybride selon l'une des revendications 1 à 4, dans laquelle, quand l'organe de sortie (19) tourne et que les vitesses de rotation d'au moins deux éléments parmi l'organe d'entrée (12), l'organe de sortie (19), la première machine électrique (MG1) et la seconde machine électrique (MG2) sont sensiblement identiques, le premier élément de prise par frottement (C-1) est libéré et le deuxième élément de prise par frottement (C-2) est appliqué.

6. Unité de transmission hybride selon l'une des revendications 1 à 5, dans laquelle le premier différentiel (P1) et le second différentiel (P2) sont des engrenages ayant quatre degrés de liberté par l'application du premier élément de prise par frottement (C-1), et l'organe d'entrée (12), l'organe de sortie (19), la première machine électrique et la seconde machine électrique (MG2) sont couplés à chaque élément d'engrenage des engrenages ayant les quatre degrés de liberté.

7. Unité de transmission hybride selon l'une des revendications 1 à 6, dans laquelle l'élément d'engrenage du premier différentiel, qui est couplé à la première machine électrique, est accouplé, via le premier élément de prise par frottement (C-1), à l'élément d'engrenage du second différentiel, qui est accouplé au troisième élément de prise par frottement (B-1).

8. Unité de transmission hybride selon l'une des revendications 1 à 6, dans laquelle l'élément d'engrenage du premier différentiel, qui est couplé à l'organe d'entrée (12), est accouplé, via le premier élément de prise par frottement (C-1), à l'élément d'engrenage du second différentiel, qui est accouplé au troisième élément de prise par frottement (B-1).
